# EUROPÄISCHE PATENTSCHRIFT

(11) **EP 4 490 832 B1**
(45) Veröffentlichungstag und Bekanntmachung des Hinweises auf die Patenterteilung: **03.12.2025**
(21) Anmeldenummer: 23706747.5
(22) Anmeldetag: 21.02.2023
(51) Int. Cl.: H02K 5/20

(54) **ELEKTROMOTOR MIT KÜHLKÖRPER**
ELECTRIC MOTOR COMPRISING A COOLING ELEMENT
MOTEUR ÉLECTRIQUE COMPRENANT UN ÉLÉMENT DE REFROIDISSEMENT

(30) Priorität: 08.03.2022 DE 102022000800
(43) Veröffentlichungstag der Anmeldung: 15.01.2025
(73) Patentinhaber: SEW-Eurodrive GmbH & Co, 76646 Bruchsal (DE)
(72) Erfinder: PARTHEYMÜLLER, Alexander, 76139 Karlsruhe (DE)
(86) Internationale Anmeldenummer: PCT/EP2023/054322
(87) Internationale Veröffentlichungsnummer: WO 2023/169816

(56) Entgegenhaltungen:
- WO-A1-2005/055396
- DE-A1- 102012 011 356
- DE-A1- 102012 022 246
- DE-A1- 102013 019 728
- DE-A1- 102015 013 036
- DE-A1- 102017 127 374
- JP-A- H09 201 000

## Beschreibung

Die Erfindung betrifft einen Elektromotor mit Kühlkörper.

Es ist allgemein bekannt, dass ein Elektromotor Verlustwärme erzeugt.

Aus der DE 10 2015 013 036 A1 ist ein Elektromotor mit Wasserkühlung bekannt.

Aus der US 5 906 236 A ist eine Wärmaaustauschjacke zur Befestigung an der äußeren Oberfläche eines Pumpenmotors bekannt.

Aus der DE 10 2014 016 171 A1 ist eine elektrische Antriebsvorrichtung bekannt.

Aus der DE 10 2012 011 356 A1 ist eine Kühlvorrichtung zum Kühlen einer elektrischen Maschine bekannt.

Aus der DE 102 51 411 A1 ist eine Vorrichtung mit einer elektronischen Schaltung mit mindestens einem Halbleitermodul bekannt.

Aus der DE 10 2005 042 784 A1 ist eine Ventilanordnung und Kühlvorrichtung bekannt.

Aus der DE 10 2008 057 381 A1 ist ein Verfahren zur Ermittlung von Leckagen an einer hydraulischen Leitung bekannt.

Aus der JP H09 201000 A ist als nächstliegender Stand der Technik ein Elektromotor mit Kühlkörper bekannt.

Aus der DE 10 2015 013 036 A ist ein Elektromotor mit Wasserkühlung bekannt.

**Aus der** DE 10 2012 011 356 A1 **ist eine Kühlvorrichtung zum Kühlen einer elektrischen Maschine bekannt.**

**Aus der** DE 10 2017 127 374 A1 **ist ein Motorengehäuse einer elektrischen Maschine bekannt.**

**Aus der** WO 2005/055396 A1 **ist eine Kühlanordnung für eine elektrische Maschine bekannt.**

**Aus der** DE 10 2013 019 728 A1 **ist ein Elektromotor bekannt.**

**Aus der** DE 10 2012 022246 A1 **ist eine Vorrichtung, aufweisend ein Gehäuseteil und ein weiteres Teil, bekannt.**

Der Erfindung liegt daher die Aufgabe zugrunde, eine Entwärmung eines Elektromotors weiterzubilden, wobei eine einfache und kostengünstige Herstellung ermöglicht sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor mit Kühlkörper sind, dass der Elektromotor ein Statorgehäuseteil aufweist,
wobei das Statorgehäuseteil mit dem Kühlkörper mittels eines auf das Statorgehäuseteil aufgebrachten Klebstoffs klebeverbunden ist.

Von Vorteil ist dabei, dass der Kühlkörper anklebbar und somit eine einfache kostengünstige Herstellung erreicht ist.

Bei einer vorteilhaften Ausgestaltung ist der Klebstoff wärmeleitend. Von Vorteil ist dabei, dass die Entwärmung effizient ausführbar ist. Insbesondere ist die Wärmeleitfähigkeit des Klebstoffs größer als ein Hundertstel, insbesondere ein Zehntel, der Wärmeleitfähigkeit des Materials des Kühlkörpers.

Bei einer vorteilhaften Ausgestaltung weist der Klebstoff wärmeleitende Partikel, insbesondere aus Zinkoxid und/oder Keramik, auf. Von Vorteil ist dabei, dass die Wärmeleitfähigkeit des Klebstoffs hoch ist.

Bei einer vorteilhaften Ausgestaltung ist das Statorgehäuseteil als Aluminium-Stranggussteil gefertigt,
wobei der Kühlkörper aus Aluminium oder aus einem Edelstahl gefertigt ist. Von Vorteil ist dabei, dass eine einfache Herstellung ermöglicht ist.

**Erfindungsgemäß** liegt der Kühlkörper an einer Fläche des Statorgehäuseteils an, wobei der Klebstoff zwischen dem Kühlkörper und dem Statorgehäuseteil angeordnet ist,
wobei die Fläche Vertiefungen aufweist, welche mit Klebstoff gefüllt sind. Von Vorteil ist dabei, dass eine verbesserte Haltekraft erreichbar ist, da die Vertiefungen einer Rauheit entsprechend wirken.

Bei einer vorteilhaften Ausgestaltung sind die Vertiefungen zueinander parallel verlaufende Nuten, insbesondere Axialnuten, sind. Von Vorteil ist dabei, dass eine einfache Herstellung ermöglicht ist und/oder der Materialaufwand verringert ist.

Bei einer vorteilhaften Ausgestaltung umfasst der vom Statorgehäuseteil in axialer Richtung überdeckte Bereich den vom Kühlkörper in axialer Richtung überdeckten Bereich,
insbesondere wobei die axiale Richtung parallel zur Drehachse der Rotorwelle des Elektromotors ausgerichtet ist. Von Vorteil ist dabei, dass der Kühlkörper in axialer Richtung kürzer ist als das Statorgehäuseteil und höchstens bündig abschließt.

Bei einer vorteilhaften Ausgestaltung ist die Fläche eine Rohfläche, insbesondere also ein unbearbeiteter Stranggussoberflächenbereich. Von Vorteil ist dabei, dass eine Verbesserte Haltekraft erreichbar ist infolge der Rauheit.

Bei einer vorteilhaften Ausgestaltung ist das Statorgehäuseteil quaderförmig, insbesondere wobei der Kühlkörper an einer ersten Seite des quaderförmigen Statorgehäuseteils angeklebt ist und ein zweiter Kühlkörper an einer dazu gegenüberliegenden Seite des quaderförmigen Statorgehäuseteils angeordnet ist,
insbesondere wobei beide Kühlkörper zueinander identische ausgeführt sind. Von Vorteil ist dabei, dass eine effiziente Abfuhr der Verlustwärme erreichbar ist und der Motor kompakt ausführbar ist, also eine hohe Antriebsleistung pro Bauvolumen erreicht.

**Erfindungsgemäß** weist der Kühlkörper zueinander parallel ausgerichtete Sacklochbohrungen auf,
und eine erste, als Sacklochbohrung ausgeführte Querbohrung die zueinander parallel ausgerichteten Sacklochbohrungen miteinander verbindet, insbesondere an deren Endbereich,
wobei die erste Querbohrung mit einem Verschlussteil zur Umgebung hin verschlossen ist,

insbesondere wobei das Verschlussteil ein Verschlussstopfen oder eine Verschlussschraube ist. Von Vorteil ist dabei, dass eine einfache Herstellung ermöglicht ist und eine hohe Dichtigkeit erreichbar ist, da die Querbohrung von nur einem einzigen Verschlussteil verschließbar ist.

Bei einer vorteilhaften Ausgestaltung verbindet eine zweite, als Sacklochbohrung ausgeführte Querbohrung die zueinander parallel ausgerichteten Sacklochbohrungen miteinander, insbesondere in deren Mündungsbereich,
wobei die zweite Querbohrung mit einem zweiten Verschlussteil zur Umgebung hin verschlossen ist,
insbesondere wobei das Verschlussteil ein Verschlussstopfen oder eine Verschlussschraube ist. Von Vorteil ist dabei, dass zusätzlich eine Verwirbelung im Mündungsbereich erzeugbar ist und daher eine möglichst hohe Turbulenz des Kühlmediums erreichbar ist, so dass der Wärmeübergang vom Kühlkörper zum Kühlmedium verbessert ist.

Bei einer vorteilhaften Ausgestaltung dichtet ein auf das Verschlussteil aufgesteckter Dichtring zum Statorgehäuseteil hin ab. Von Vorteil ist dabei, dass eine einfache Herstellung ermöglicht ist.

Bei einer vorteilhaften Ausgestaltung ist zwischen dem Verschlussteil und dem Statorgehäuseteil auf der der Umgebung hin zugewandten Seite des Dichtrings Farbstoff angeordnet, welcher in einem Kühlmedium lösbar ist,
insbesondere wobei der Farbstoff die rote und/oder gelbe Farbstoffpartikel aufweist. Von Vorteil ist dabei, dass eine Leckage einfach und sicher erkennbar ist.

Bei einer vorteilhaften Ausgestaltung ist das Statorgehäuseteil mit einem Lagerschild verbunden, in dem ein Lager der Rotorwelle aufgenommen ist,
insbesondere wobei der Kühlkörper vom Lagerschild axial beabstandet ist. Von Vorteil ist dabei, dass das Statorgehäuseteil als Stranggussteil herstellbar ist und das Lagerschild als bearbeitetes Stahlteil.

**Erfindungsgemäß** ist das Statorgehäuseteil mit einem Lagerflansch zum Anschluss einer vom Elektromotor anzutreibenden Vorrichtung verbunden, in dem ein Lager der Rotorwelle aufgenommen ist,
insbesondere wobei der Kühlkörper vom Lagerschild axial beabstandet ist. Von Vorteil ist dabei, dass der Lagerflansch als bearbeitetes Stahlteil ausführbar ist.

**Erfindungsgemäß** weist die Oberfläche des Lagerflansches zweite Vertiefungen auf, welche in die Vertiefungen des Statorgehäuseteils münden und/oder in Flucht liegen mit den Vertiefungen des Statorgehäuseteils. Von Vorteil ist dabei, dass sich in den Vertiefungen des Statorgehäuseteils ansammelndes Wasser über die zweiten Vertiefungen herausleiten lässt, insbesondere wenn diese zweiten Vertiefungen durchgehend am Lagerschild ausgeführt sind.

Bei einer vorteilhaften Ausgestaltung weist die Oberfläche des Lagerschilds dritte Vertiefungen auf, welche in die Vertiefungen des Statorgehäuseteils münden und/oder in Flucht liegen mit den Vertiefungen des Statorgehäuseteils. Von Vorteil ist dabei, dass sich in den Vertiefungen des Statorgehäuseteils ansammelndes Wasser über die dritten Vertiefungen herausleiten lässt, insbesondere wenn diese zweiten Vertiefungen durchgehend am Lagerflansch ausgeführt sind.

Weitere Vorteile ergeben sich aus den Unteransprüchen.

Die Erfindung wird nun anhand von schematischen Abbildungen näher erläutert:

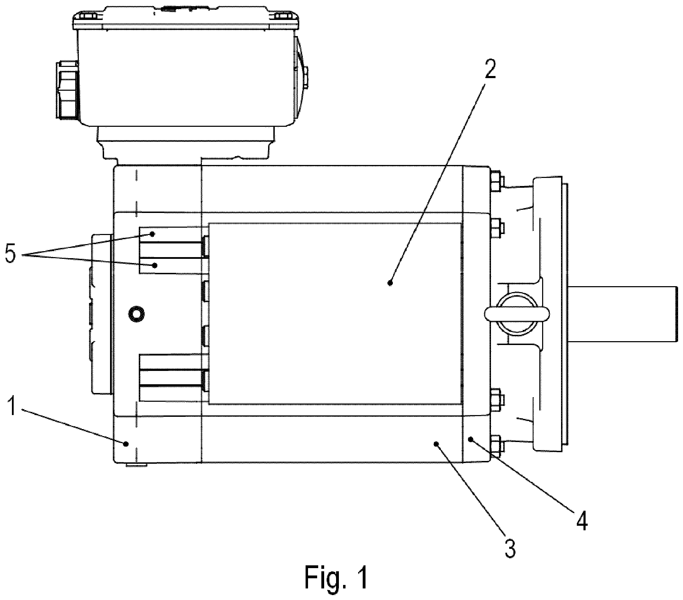

In der Figur 1 ist ein erster erfindungsgemäßer Elektromotor mit Kühlkörper 2 in Seitenansicht dargestellt.
In der Figur 2 ist eine Vorderansicht des Elektromotors dargestellt.
In der Figur 3 ist der Elektromotor mit angeschnittenem Kühlkörper 2 dargestellt.

Wie in den Figuren dargestellt, weist der Elektromotor ein Statorgehäuseteil 3 auf, an dessen erstem axialen Ende ein Lagerschild 1 angeordnet ist, welches ein Lager zur drehbaren Lagerung einer Rotorwelle des Elektromotors aufnimmt, und an dessen anderem axialen Ende ein Lagerflansch 4 angeordnet ist, welcher ein zweites Lager zur drehbaren Lagerung der Rotorwelle aufnimmt, und mit welchem eine anzutreibende Vorrichtung, insbesondere Getriebe, verbunden ist.

Innerhalb des Statorgehäuseteils 3 ist die Statorwicklung aufgenommen, welche im Betrieb Verlustwärme erzeugt.

Das Statorgehäuseteil 3 ist vorzugsweise als Aluminium-Stranggussteil ausgeführt.

An der Außenseite des insbesondere quaderförmig ausgeführten Statorgehäuseteils 3 ist zumindest eine erste ebene Fläche ausgebildet, durch welche sich langgestreckte Vertiefungen 5 hindurch erstrecken. Die Vertiefungen sind vorzugsweise als Nuten, insbesondere als in axialer Richtung sich erstreckende Nuten, ausgeführt.

Auf die insbesondere die Rauheit eines Rohstranggussteils aufweisende Fläche ist ein Klebstoff aufgebracht, der wärmeleitend ausgeführt ist. Hierbei ist im Klebstoff vorzugsweise ein Anteil von Zinkoxid enthalten, Alternativ oder zusätzlich sind aber auch Keramik-Partikel hinzufügbar.

Mittels des Klebstoffs ist ein Kühlkörper, insbesondere wassergekühlter Kühlkörper, mit dem Statorgehäuseteil 3 klebeverbunden.

Die Vertiefungen 5 erstrecken sich bis in das Lagerschild 1 hinein. Somit sind die Vertiefungen 5 des Lagerschilds 1 in Flucht zu den Vertiefungen des Statorgehäuseteils 3.

Der Kühlkörper 2 ist aus Aluminium oder einem Edelstahl ausgeführt.

Die axiale Richtung ist parallel zur Drehachse der Rotorwelle des Elektromotors ausgerichtet.

Der Kühlkörper 2 ist in axialer Richtung kürzer als das aus Strangguss gefertigte Statorgehäuseteil 3. Die Stranggussrichtung ist parallel zur axialen Richtung.

Der in axialer Richtung vom Statorgehäuseteil 3 überdeckte Bereich umfasst den vom Kühlkörper 2 in axialer Richtung überdeckten Bereich.

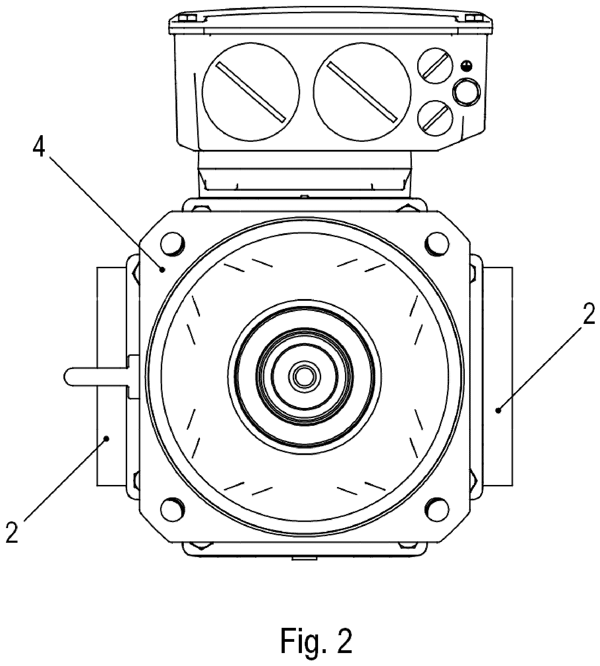

Vorzugsweise ist am Statorgehäuseteil 3 mindestens eine weitere ebene Fläche mit Vertiefungen 5 angeordnet. An jeder der Flächen ist jeweils ein wie oben beschrieben ausgebildeter Kühlkörper 2 angeklebt, insbesondere symmetrisch am Motor, wie in Figur 2 gezeigt.

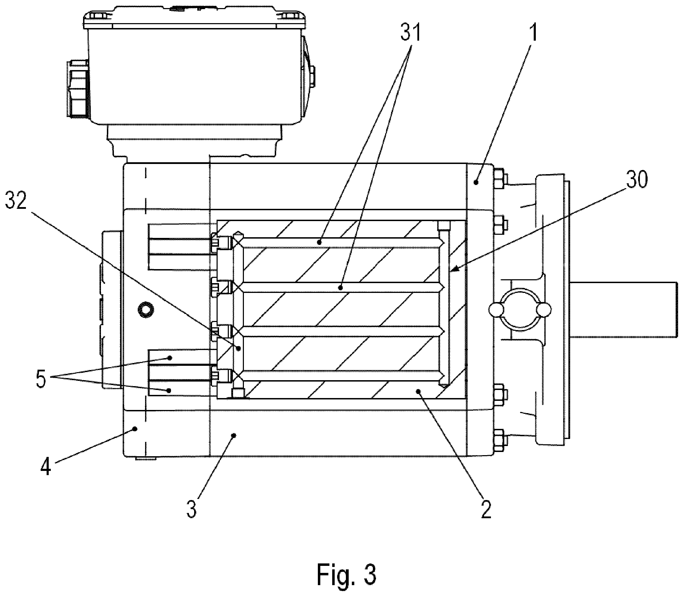

Wie in Figur 3 gezeigt, ist der Kühlkörper 2 im Wesentlichen quaderförmig geformt.

Durch Sacklochbohrungen ist der Kühlkörper mit zumindest einem Kühlkanal versehen.

Hierzu sind axial gerichtete erste Sacklochbohrungen 31 von einer ersten Seite des Kühlkörpers 2 aus eingebracht, wobei diese erste Seite die von dem Lagerschild 1 abgewandte Seite ist.

Eine als Sacklochbohrung 30 ausgeführte Querbohrung verbindet die ersten Sacklochbohrungen 31, insbesondere deren Endbereich.

Am Mündungsbereich der Sacklochbohrungen 31 sind Anschlüsse angebracht zur Verbindung mit Schläuchen. Hierzu ist jede der ersten Sacklochbohrungen 31 jeweils als Stufenbohrung ausgeführt, welche einen Innengewindebereich aufweist, in welche ein Schraubteil eingeschraubt ist, das mit dem jeweiligen Schlauch dicht verbunden ist.

Somit ist ein flüssiges Kühlmedium, wie Wasser, der Kühlkanalstruktur über einen ersten Schlauch zuführbar und von der Kühlkanalstruktur über einen anderen Schlauch abführbar.

Insbesondere verbindet eine weitere, als Sacklochbohrung 32 ausgeführte Querbohrung die ersten Sacklochbohrungen in der Nähe ihrer Mündungsbereiche der ersten Sacklochbohrungen.

Diese weitere Sacklochbohrung 32 ist zur Umgebung hin mit einem Verschlussstopfen verschlossen. Alternativ ist statt des Verschlussstopfens aber auch eine Verschlussschraube in einen Gewindeberiech der weiteren Sacklochbohrung 32 einschraubbar, der im Mündungsbereich der weiteren Sacklochbohrung 32 angeordnet ist. Der Verschlussstopfen beziehungsweise die Verschlussschraube weist einen Dichtring, insbesondere O-Ring, zur Abdichtung zum Kühlkörper 2 hin auf.

Die als Sacklochbohrung 30 ausgeführte Querbohrung ist zur Umgebung hin mit einem weiteren Verschlussstopfen verschlossen. Alternativ ist statt des weiteren Verschlussstopfens aber auch eine weitere Verschlussschraube in einen Gewindeberiech der als Sacklochbohrung 32 ausgeführten Querbohrung einschraubbar, der im Mündungsbereich der als Sacklochbohrung 32 ausgeführten Querbohrung angeordnet ist. Der weitere Verschlussstopfen beziehungsweise die weitere Verschlussschraube weist einen weiteren Dichtring, insbesondere O-Ring, zur Abdichtung zum Kühlkörper 2 hin auf.

Vorzugsweise wird ein im Kühlmedium löslicher Farbstoff an der Oberfläche der jeweiligen Verschlussschraube oder des jeweiligen Verschlussstopfens auf der vom Dichtring her gesehen zur Umgebung hin zugewandten Seite angebracht, so dass bei einer Leckage das austretende Kühlmedium gefärbt ist und daher leicht erkennbar. Vorzugsweise weist der Farbstoff die Farbe Rot, Gelb oder eine Mischfarbe davon auf. Die gelben Farbpartikel verbessern dabei die Erkennbarkeit einer Leckage auch für Menschen mit einer Rot-Grün-Sehschwäche. Die roten Farbpartikel verbessern dabei die Erkennbarkeit einer Leckage auch für Menschen mit einer Gelb-Blau-Sehschwäche.

Bevorzugt ist das Statorgehäuse 3 quaderförmig ausgeführt und an zwei gegenüberliegenden Seiten des Quaders ist jeweils ein vorgenannter Kühlkörper 2 angeklebt. Ein Anschlusskasten des Elektromotors ist an einer Seite des Quaders ausgebildet, die an die beiden mit einem jeweiligen Kühlkörper 2 verbundenen Seiten angrenzt.

Bei weiteren erfindungsgemäßen Ausführungsbeispielen sind weitere ebene Flächen am Statorgehäuseteil 3 ausgeführt, wobei jeweils ein Kühlkörper 2 angeklebt ist an der jeweiligen Fläche.

### Bezugszeichenliste

1 Lagerschild
2 Kühlkörper, insbesondere wassergekühlter Kühlkörper
3 Statorgehäuse
4 Lagerflansch
5 Vertiefung
30 Sacklochbohrung
31 Sacklochbohrung
32 Sacklochbohrung

## Patentansprüche

1. Elektromotor mit Kühlkörper (2), wobei der Elektromotor ein Statorgehäuseteil (3) aufweist, wobei
das Statorgehäuseteil mit dem Kühlkörper mittels eines auf das Statorgehäuseteil aufgebrachten Klebstoffs klebeverbunden ist,
der Kühlkörper an einer Fläche des Statorgehäuseteils anliegt, wobei der Klebstoff zwischen dem Kühlkörper und dem Statorgehäuseteil angeordnet ist,
wobei die Fläche Vertiefungen aufweist, welche mit Klebstoff gefüllt sind,
**dadurch gekennzeichnet, dass**
der Kühlkörper zueinander parallel ausgerichtete Sacklochbohrungen (31) aufweist und eine erste, als Sacklochbohrung ausgeführte Querbohrung (30) die zueinander parallel ausgerichteten Sacklochbohrungen miteinander verbindet, insbesondere an deren Endbereich,
wobei die erste Querbohrung mit einem ersten Verschlussteil zur Umgebung hin verschlossen ist,
wobei das Statorgehäuseteil mit einem Lagerflansch (4) zum Anschluss einer vom Elektromotor anzutreibenden Vorrichtung verbunden ist, in dem ein Lager der Rotorwelle aufgenommen ist,
wobei die Oberfläche des Lagerflansches zweite Vertiefungen (5) aufweist, welche in die Vertiefungen des Statorgehäuseteils münden und/oder in Flucht liegen mit den Vertiefungen des Statorgehäuseteils.

2. Elektromotor nach Anspruch 1,
**dadurch gekennzeichnet, dass**
der Klebstoff wärmeleitend ist.

3. Elektromotor nach einem der vorangegangenen Ansprüche,
**dadurch gekennzeichnet, dass**
der Klebstoff wärmeleitende Partikel, insbesondere aus Zinkoxid und/oder Keramik, aufweist.

4. Elektromotor nach einem der vorangegangenen Ansprüche,
**dadurch gekennzeichnet, dass**
das Statorgehäuseteil als Aluminium-Stranggussteil gefertigt ist,
wobei der Kühlkörper aus Aluminium oder aus einem Edelstahl gefertigt ist.

5. Elektromotor nach einem der vorangegangenen Ansprüche,
**dadurch gekennzeichnet, dass**
die Vertiefungen zueinander parallel verlaufende Nuten, insbesondere Axialnuten, sind.

6. Elektromotor nach einem der vorangegangenen Ansprüche,
**dadurch gekennzeichnet, dass**
der vom Statorgehäuseteil in axialer Richtung überdeckte Bereich den vom Kühlkörper in axialer Richtung überdeckten Bereich umfasst,
insbesondere wobei die axiale Richtung parallel zur Drehachse der Rotorwelle des Elektromotors ausgerichtet ist.

7. Elektromotor nach einem der vorangegangenen Ansprüche,
**dadurch gekennzeichnet, dass**
die Fläche eine Rohfläche ist, insbesondere also ein unbearbeiteter Stranggussoberflächenbereich ist.

8. Elektromotor nach einem der vorangegangenen Ansprüche,
**dadurch gekennzeichnet, dass**
das Statorgehäuseteil quaderförmig ist, insbesondere wobei der Kühlkörper an einer ersten Seite des quaderförmigen Statorgehäuseteils angeklebt ist und ein zweiter Kühlkörper an einer dazu gegenüberliegenden Seite des quaderförmigen Statorgehäuseteils angeordnet ist,
insbesondere wobei beide Kühlkörper zueinander identische ausgeführt sind.

9. Elektromotor nach einem der vorangegangenen Ansprüche,
**dadurch gekennzeichnet, dass**
das **erste** Verschlussteil ein Verschlussstopfen oder eine Verschlussschraube ist.

10. Elektromotor nach einem der vorangegangenen Ansprüche,
**dadurch gekennzeichnet, dass**
eine zweite, als Sacklochbohrung ausgeführte Querbohrung (32) die zueinander parallel ausgerichteten Sacklochbohrungen miteinander verbindet, insbesondere in deren Mündungsbereich,
wobei die zweite Querbohrung mit einem zweiten Verschlussteil zur Umgebung hin verschlossen ist,
insbesondere wobei das **zweite** Verschlussteil ein Verschlussstopfen oder eine Verschlussschraube ist.

11. Elektromotor nach einem der vorangegangenen Ansprüche,
**dadurch gekennzeichnet, dass**
ein auf das Verschlussteil aufgesteckter Dichtring zum Statorgehäuseteil hin abdichtet.

12. Elektromotor nach **Anspruch 11,**
**dadurch gekennzeichnet, dass**
zwischen dem Verschlussteil und dem Statorgehäuseteil auf der der Umgebung hin zugewandten Seite des Dichtrings Farbstoff angeordnet ist, welcher in einem Kühlmedium lösbar ist,
insbesondere wobei der Farbstoff die rote und/oder gelbe Farbstoffpartikel aufweist.

13. Elektromotor nach einem der vorangegangenen Ansprüche,
**dadurch gekennzeichnet, dass**
das Statorgehäuseteil mit einem Lagerschild verbunden ist, in dem ein Lager der Rotorwelle aufgenommen ist,
insbesondere wobei der Kühlkörper vom Lagerschild axial beabstandet ist.

14. Elektromotor nach Anspruch 13,
**dadurch gekennzeichnet, dass**
**der Kühlkörper vom Lagerschild axial beabstandet ist.**

15. Elektromotor nach Anspruch 13 oder 14,
**dadurch gekennzeichnet, dass**
die Oberfläche des Lagerschilds
dritte Vertiefungen aufweist, welche in die Vertiefungen des Statorgehäuseteils münden und/oder in Flucht liegen mit den Vertiefungen des Statorgehäuseteils.

## Claims

1. An electric motor having a cooling element (2),
wherein the electric motor has a stator housing part (3),
wherein the stator housing part is adhesively connected to the cooling element by means of an adhesive applied to the stator housing part,
the cooling element rests against a surface of the stator housing part, wherein the adhesive is arranged between the cooling element and the stator housing part,
wherein the surface has depressions which are filled with adhesive,
**characterised in that**
the cooling element has blind bores (31) oriented parallel to one another,
and a first transverse bore (30), in the form of a blind bore, connects to one another the blind bores, oriented in a parallel manner to one another, in particular connects them at their end region,
wherein the first transverse bore is closed towards the surroundings by means of a first closing part,
wherein the stator housing part is connected to a bearing flange (4), for connection of a device to be driven by the electric motor, in which a bearing of the rotor shaft is received, wherein the surface of the bearing flange has second depressions (5) which open into the depressions of the stator housing part and/or are aligned with the depressions of the stator housing part.

2. An electric motor according to claim 1,
**characterised in that**
the adhesive is heat-conducting.

3. An electric motor according to any one of the preceding claims,
**characterised in that**
the adhesive has heat-conducting particles, in particular of zinc oxide and/or ceramic.

4. An electric motor according to any one of the preceding claims,
**characterised in that**
the stator housing part is manufactured as an aluminium continuous casting part,
wherein the cooling element is manufactured of aluminium or of a high-quality steel.

5. An electric motor according to any one of the preceding claims,
**characterised in that**
the depressions are grooves running parallel to one another, in particular axial grooves.

6. An electric motor according to any one of the preceding claims,
**characterised in that**
the region covered in an axial direction by the stator housing part comprises the region covered in an axial direction by the cooling element,
in particular wherein the axial direction is oriented parallel to the rotational axis of the rotor shaft of the electric motor.

7. An electric motor according to any one of the preceding claims,
**characterised in that**
the surface is a raw surface, in particular therefore an unworked continuous casting surface region.

8. An electric motor according to any one of the preceding claims,
**characterised in that**
the stator housing part is cuboid, in particular wherein the cooling element is fastened with adhesive to a first side of the cuboid stator housing part and a second cooling element is arranged on an opposite side of the cuboid stator housing part,
in particular wherein both cooling elements are identical to one another.

9. An electric motor according to any one of the preceding claims,
**characterised in that**
the first closing part is a closing plug or a plug screw.

10. An electric motor according to any one of the preceding claims,
**characterised in that**
a second transverse bore (32), in the form of a blind bore, connects to one another the blind bores, oriented in a parallel manner to one another, in particular connects them in their aperture region,
wherein the second transverse bore is closed towards the surroundings by means of a second closing part,
in particular wherein the second closing part is a closing plug or a plug screw.

11. An electric motor according to any one of the preceding claims,
**characterised in that**
a sealing ring placed onto the closing part seals with respect to the stator housing part.

12. An electric motor according to claim 11,
**characterised in that**
at that side of the sealing ring facing the surroundings there is colorant arranged between the closing part and the stator housing part, which colorant is soluble in a cooling medium,
in particular wherein the colorant has the red and/or yellow colorant particles.

13. An electric motor according to any one of the preceding claims,
**characterised in that**
the stator housing part is connected to an end shield in which there is received a bearing of the rotor shaft,
in particular wherein the cooling element is axially spaced apart from the end shield.

14. An electric motor according to claim 13,
**characterised in that**
the cooling element is axially spaced apart from the end shield.

15. An electric motor according to claim 13 or 14,
**characterised in that**
the surface of the end shield has third depressions which open into the depressions of the stator housing part and/or are aligned with the depressions of the stator housing part.

## Revendications

1. Moteur électrique avec dissipateur de chaleur (2),
le moteur électrique présentant une partie formant carter de stator (3),
la partie formant carter de stator étant reliée par collage au dissipateur thermique au moyen d'un adhésif appliqué sur la partie formant carter de stator,
le dissipateur thermique reposant sur une surface de la partie formant carter de stator, l'adhésif étant agencé entre le dissipateur thermique et la partie formant carter de stator,
la surface présentant des renfoncements qui sont remplis de colle,
**caractérisé en ce que**
le dissipateur de chaleur présente des trous borgnes (31) orientés parallèlement les uns aux autres
et un premier alésage transversal (30) réalisé sous la forme d'un trou borgne et reliant les trous borgnes orientés parallèlement les uns aux autres, en particulier au niveau de leurs extrémités,
le premier alésage transversal étant fermé par rapport à l'environnement grâce à une première partie de fermeture,
la partie formant carter de stator étant reliée, en vue d'un raccordement à un dispositif à entraîner par le moteur électrique, à une bride de palier (4) au sein de laquelle est accueilli un palier de l'arbre de rotor,
la surface de la bride de palier présentant des seconds renfoncements (5) qui débouchent dans les renfoncements de la partie formant carter de stator et/ou qui sont en alignement avec les renfoncements de la partie formant carter de stator.

2. Moteur électrique selon la revendication 1,
**caractérisé en ce que**
la colle est thermoconductrice.

3. Moteur électrique selon l'une quelconque des revendications précédentes,
**caractérisé en ce que**
l'adhésif présente des particules conductrices de chaleur, en particulier constituées d'oxyde de zinc et/ou de céramique.

4. Moteur électrique selon l'une quelconque des revendications précédentes, **caractérisé en ce que**
la partie formant carter de stator est fabriquée sous la forme d'une pièce en aluminium issue d'une coulée continue,
le dissipateur de chaleur étant fabriqué en aluminium ou en acier inoxydable.

5. Moteur électrique selon l'une quelconque des revendications précédentes, **caractérisé en ce que**
les renfoncements sont des rainures parallèles les unes aux autres, en particulier des rainures axiales.

6. Moteur électrique selon l'une quelconque des revendications précédentes, **caractérisé en ce que**
la région recouverte dans la direction axiale par la partie formant carter de stator comprend la région recouverte dans la direction axiale par le dissipateur de chaleur, la direction axiale étant en particulier orientée de manière parallèle à l'axe de rotation de l'arbre de rotor du moteur électrique,

7. Moteur électrique selon l'une quelconque des revendications précédentes, **caractérisé en ce que**
la surface est une surface brute, en particulier une région de surface de coulée continue non traitée.

8. Moteur électrique selon l'une quelconque des revendications précédentes, **caractérisé en ce que**
la partie formant carter de stator est de forme parallélépipédique, le dissipateur thermique étant collé sur un premier côté de la partie formant carter de stator de forme parallélépipédique et un second dissipateur de chaleur étant agencé sur un côté, opposé au premier côté, de la partie formant carter de stator de forme parallélépipédique,
les deux dissipateurs de chaleur étant en particulier identiques l'un à l'autre.

9. Moteur électrique selon l'une quelconque des revendications précédentes, **caractérisé en ce que**
la première pièce de fermeture est un bouchon de fermeture ou une vis de fermeture.

10. Moteur électrique selon l'une quelconque des revendications précédentes, **caractérisé en ce que**
un second alésage transversal (32) réalisé sous la forme d'un trou borgne relie entre eux les trous borgnes orientés parallèlement les uns aux autres, en particulier dans leur région de débouché,
le second alésage transversal étant fermé par rapport à l'environnement grâce à une seconde partie de fermeture,
la seconde partie de fermeture étant en particulier un bouchon de fermeture ou une vis de fermeture.

11. Moteur électrique selon l'une quelconque des revendications précédentes, **caractérisé en ce que**
une bague d'étanchéité enfichée sur la partie de fermeture assure une étanchéité en direction de la partie formant carter de stator.

12. Moteur électrique selon la revendication 11,
**caractérisé en ce que**
un colorant pouvant être dissous dans un fluide de refroidissement est agencé entre la partie de fermeture et la partie formant carter de stator du côté de la bague d'étanchéité qui est tourné vers l'environnement,
le colorant présentant en particulier des particules de colorant rouge et/ou jaune.

13. Moteur électrique selon l'une quelconque des revendications précédentes, **caractérisé en ce que**
la partie formant carter de stator est reliée à un flasque de palier au sein duquel est accueilli un palier de l'arbre de rotor,
le dissipateur de chaleur étant en particulier espacé axialement par rapport au flasque de palier.

14. Moteur électrique selon la revendication 13,
**caractérisé en ce que**
le dissipateur thermique est espacé axialement par rapport au flasque de palier.

15. Moteur électrique selon la revendication 13 ou 14,
**caractérisé en ce que**
la surface du flasque de palier présente des troisièmes renfoncements (5) qui débouchent dans les renfoncements de la partie formant carter de stator et/ou qui sont en alignement avec les renfoncements de la partie formant carter de stator.
